# EUROPEAN PATENT APPLICATION

(11) **EP 3 587 064 A1**
(43) Date of publication of application: **01.01.2020**
(21) Application number: 18181044.1
(22) Date of filing: 30.06.2018
(51) Int. Cl.: B29C 45/00, B29C 45/14, B29C 37/00

(54) **PLASTIC MATERIALS WITH HIGH BONDING STRENGTH FOR PLASTIC-METAL HYBRID APPLICATIONS**

(71) Applicant: SABIC Global Technologies B.V., 4612 PX Bergen op Zoom (NL)
(72) Inventor: LEE, Seongnam, 140-090 Seoul-si (KR); SCHWARTZ, Erik, 6531 Nijmegen (NL); TER HORST, Sascha Jan, 4617 KB Bergen op Zoom (NL); KIM, Deajun, Gyeonggi-do (KR); LEE, Chunim, Seoul (KR)
(74) Representative: Elzaburu S.L.P.

(57) **Abstract**

Disclosed are plastic compositions for use in forming plastic-metal hybrid materials, the compositions including an epoxy compound. Also provided are plastic-metal hybrid materials that are formed using the inventive plastic compositions, methods for forming such materials, and electronic devices that include the hybrid materials. The plastic compositions confer beneficial bonding strength with the metal partner of a hybrid material, good impact strength, and low color change following anodization, and retain these favorable characteristics under a range of processing conditions.

## Description

### TECHNICAL FIELD

The present disclosure pertains to plastic materials for use in bonding with metal compounds pursuant to plastic-metal hybrid applications.

### BACKGROUND

Plastic-metal hybrid applications are of growing interest for the manufacture of electronic devices. Nano-molding technology (NMT) is an innovative technology wherein plastic resin is integrated with metal by injection molding the resin onto the metal part. This process allows for miniaturization and reduced product thickness relative to convention methods for integrating plastic and metal parts, and typically confers improved structural strength and permanent adhesion between plastic and metal. In some instances, a water-tight seal is provided.

The overall process for producing metal-plastic hybrid materials is a complicated and multi-step process. A key aspect is plastic performance during each stage. For example, the characteristics of the plastic are important not only during the injection molding process by which the hybrid is created, but also in subsequent steps in which the hybrid is treated in order to produce the necessary performance characteristics. Following the nano-injection molding process, the hybrid material is typically subjected to both numerical cutting and anodizing. A numerical cutting step is required to provide detailed structure of the hybrid part, and because the process generates heat and vibrational energy, the molded metal and plastic hybrid should have sufficient bonding strength and mechanical properties to withstand these external energies. An anodizing step is typically for activating the surface of the metal component in order to produce a color on the metal, and during this process the hybrid material is exposed to strong acid and base reagents. It is therefore necessary for the hybrid material (i.e., both the metal and plastic) to possess a high degree of chemical resistance in order to tolerate the anodizing process.

A basic and key property of the hybrid material is the bonding strength between the metal and plastic components. The dominant NMT materials currently in use are polyphenylene sulfide (PPS), polybutylene terephthalate (PBT) alone or blended with polyethyene terephthalate (PET), polyamide (PA), high-temperature PA (polyphthalamide-PPA), and polyetheretherketone (PEEK). All of these produce good bonding strength with metal (such as with aluminum or stainless steel). However, there are also limitations associated with each: for example, PBT(/PET) is discolored during the anodizing process due to its weak acid resistance; nylon-based materials like PA and PPA possess poor resistance to the acid reagent of the anodizing process; and, the high cost of PEEK material renders its use mostly impractical.

Thus, although various resin materials are commercially available for NMT applications, there remains a need for improvement in the rapidly progressing field. High bonding strength, relatively low material cost, good processability in order to permit NMT molding, and good mechanical properties (such as impact strength) are desired

### SUMMARY

Provided herein are plastic compositions for use in forming a plastic-metal hybrid material comprising about 45-65% by weight polybutylene terephthalate; about 6-13% by weight of an epoxy compound, such as a bifunctional epoxy compound; 0 to about 10% by weight of an impact modifier; about 25-45% by weight of glass fibers; and 0 to about 1% by weight of polyethylene, wherein the epoxy compound has one or more of (i) an epoxide equivalent weight of less than 550 g/eq or greater than 600 g/eq as measured according to ASTM D-1652, (ii) a percentage epoxide of at least 2.0% as measured according to ASTM D-1652, or (iii) a melt viscosity of at least 400 MPa as measured at 150°C according to ASTM D-445, wherein the composition does not include polyethylene terephthalate, and wherein the total percentage by weight of all components is 100.

Also disclosed are plastic-metal hybrid materials that are formed by injection molding the plastic composition as described above onto a surface of a metal part, the surface having nanometer-sized pores, micron-sized pores, or both.

The present disclosure also provides methods for forming a plastic-metal hybrid material comprising injection molding a plastic composition as described above onto a surface of a metal part, the surface having nanometer-sized pores, micron-sized pores, or both.

Also provided are electronic devices comprising a plastic-metal hybrid material that is formed from a plastic composition as described above, as well as electronic devices comprising a plastic-metal hybrid material of the above-described type, and electronic devices comprising a plastic-metal hybrid material that is formed according to the preceding methods.

### DETAILED DESCRIPTION OF ILLUSTRATIVE EMBODIMENTS

It is to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims that follow, reference will be made to a number of terms which shall be defined herein.

As used in the specification and the appended claims, the singular forms "a," "an" and "the" include plural equivalents unless the context clearly dictates otherwise. Thus, for example, reference to "a polycarbonate polymer" includes mixtures of two or more polycarbonate polymers.

As used herein, the term "combination" is inclusive of blends, mixtures, alloys, reaction products, and the like.

As used herein, the terms "about" and "at or about" mean that the amount or value in question can be the value designated some other value approximately or about the same. It is generally understood, as used herein, that it is preferably the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise. In addition, where "about" is used one time prior to a list of possible values or ranges (e.g., "about 1, 2, 3, 4, 5, or 6" or "about 1-5, 1-4, 2-4, or 3-4"), it is understood that the term "about" can apply to each number or range in the list, not just the first number or range following the term.

All ranges disclosed herein are inclusive of the endpoints and are independently combinable. The endpoints of the ranges and any values disclosed herein are not limited to the precise range or value; they are sufficiently imprecise to include values approximating these ranges and/or values. Ranges articulated within this disclosure, e.g. numerics/values, shall include disclosure for possession purposes and claim purposes of the individual points within the range, sub-ranges, and combinations thereof. As an example, for the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

As used herein, the terms "optional" or "optionally" mean that the subsequently described event, condition, component, or circumstance may or may not occur, and that the description includes instances where said event or circumstance occurs and instances where it does not.

Disclosed are the components to be used to prepare the compositions of the disclosure as well as the compositions themselves, methods for preparing such compositions, and items made from the compositions. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight, of a particular element or component in a composition or article, denote the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt. %," and "wt. %" of a component, which can be used interchangeably, unless specifically stated to the contrary, are based on the total weight of the formulation or composition in which the component is included. For example if a particular element or component in a composition or article is said to have 8% by weight, it is understood that this percentage is relative to a total compositional percentage of 100% by weight.

All cited patents, patent applications, and other references are incorporated herein by reference in their entirety.

While typical embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

As summarized above, the present disclosure provides plastic compositions for use in forming a plastic-metal hybrid material comprising about 45-65% by weight polybutylene terephthalate; about 6-13% by weight of an epoxy compound, such as a bifunctional epoxy compound; 0 to about 10% by weight of an impact modifier; about 25-45% by weight of glass fibers; and 0 to about 1% by weight of polyethylene, wherein the epoxy compound has one or more of (i) an epoxide equivalent weight of less than 550 g/eq or greater than 600 g/eq as measured according to ASTM D-1652, (ii) a percentage epoxide of at least 2.0% as measured according to ASTM D-1652, or (iii) a melt viscosity of at least 400 MPa as measured at 150°C according to ASTM D-445, wherein the composition does not include polyethylene terephthalate, and wherein the total percentage by weight of all components is 100.

Polybutylene terephthalate (PBT), whose formal name is poly(oxy-1,4-butanediyloxycarbonyl-1,4-phenylenecarbonyl) is formed from monomer units that respectively possess the following structure:

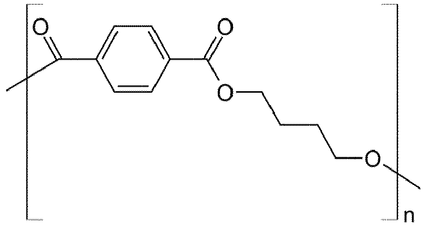

In the present compositions, polybutylene terephthalate may be present in an amount of about 45-65, 50-65, 52-65, 55-65, 56-64, 56-63, 57 to 63 percentage by weight, or in an amount of about 45, 46, 47, 48, 49, 50, 51, 52, 53, 54, 55, 56, 57, 58, 59, 60, 61, 62, 63, 64, or 65 percentage by weight.

The PBT component for use in the present compositions may be selected according to its molecular weight. The polyester can have a degree of polymerization, n, of as high as 1,000, or 100 to 1,000. The polyester can have a weight average molecular weight (Mw) of up to 200 kilograms per mole (kg/mol), such as 30 to 200 kg/mol, 50 to 200 kg/mol, 100 to 200 kg/mol, or 100 to 150 kg/mol, based on polystyrene standards. For example, the PBT may have a molecular weight of about 115 kg/mol. In another embodiment, the PBT may have a molecular weight of about 61 kg/mol.

The present compositions also include about 6-13% by weight of an epoxy compound, which may contain one, two, or more than two epoxy groups per compound. For example, the epoxy molecule can include 1-20, or 2-6 epoxy moieties per molecule. In certain embodiments, the epoxy compound is bifunctional. Epoxy resins, such as bifunctional epoxy resins (*i.e*., bearing two epoxy groups per compound) for use in the plastic compositions can be characterized by one or more of (i) an epoxide equivalent weight of less than 550 g/eq or greater than 600 g/eq as measured according to ASTM D-1652, (ii) a percentage epoxide of at least 2.0% as measured according to ASTM D-1652, or (iii) a melt viscosity of at least 400 MPa as measured at 150°C according to ASTM D-445. In certain embodiments, the resin possesses an epoxide equivalent weight of less than 550 g/eq or greater than 600 g/eq as measured according to ASTM D-1652. In some embodiments, the resin possesses a percentage epoxide of at least 2.0% as measured according to ASTM D-1652. The resin may also or alternatively have a melt viscosity of at least 400 MPa as measured at 150°C according to ASTM D-445. Thus, in addition to the other characteristics described herein, the plastic compositions may include a resin that has an epoxide equivalent weight of less than 550 g/eq or greater than 600 g/eq as measured according to ASTM D-1652, and a percentage epoxide of at least 2.0% as measured according to ASTM D-1652. In other instances, the resin may have an epoxide equivalent weight of less than 550 g/eq or greater than 600 g/eq as measured according to ASTM D-1652, and a melt viscosity of at least 400 MPa as measured at 150°C according to ASTM D-445. In other embodiments, the resin may have a percentage epoxide of at least 2.0% as measured according to ASTM D-1652, and a melt viscosity of at least 400 MPa as measured at 150°C according to ASTM D-445. In yet other instances, the resin may be characterized by (i) an epoxide equivalent weight of less than 550 g/eq or greater than 600 g/eq as measured according to ASTM D-1652, (ii) a percentage epoxide of at least 2.0% as measured according to ASTM D-1652, and (iii) a melt viscosity of at least 400 MPa as measured at 150°C according to ASTM D-445.

Some embodiments of the present compositions include an epoxy compound, such as a bifunctional epoxy compound, having a molecular weight of about 700-1100 g/mol, an epoxide equivalent weight of about 475-550 g/eq, and a percentage epoxide of about 7.8-9.1%. In other instances, the epoxy compound, such as a bifunctional epoxy compound, has an epoxide equivalent weight of about 1600-2000 g/eq, and a percentage epoxide of about 2.2-2.7%. Certain commercially available materials can be used as the epoxy compound in the present compositions. For example, either D.E.R. 667 or D.E.R. 671, both produced by Chemroy Canada Inc. (Ontario, Canada), and formerly by the Dow Chemical Company (Midland, Michigan, U.S.A.), may be used as the epoxy compound in the present inventions.

As described above, the epoxy compounds, such as bifunctional epoxy compounds, are included in the present compositions in an amount of about 6-13 percent by weight. For example, the epoxy compounds, such as bifunctional epoxy compounds, may be present in the compositions in an amount of about 6-12, 6-11, 6-10, 6-9, 6-8, 6-7, 7-13, 8-13, 9-13, 10-13, 7-12, 7-11, 7-10, 8-10, 11-13, 12-13, or 9-10 percent by weight, or in an amount of about 6, 7, 8, 9, 10, 11, 12, or 13 percent by weight. In some embodiments, the amount of epoxy compound in the compositions is about 6-7% by weight. In other embodiments, the amount of epoxy compound in the compositions is about 12-13% by weight.

An exemplary epoxy moiety is shown in formula (D) 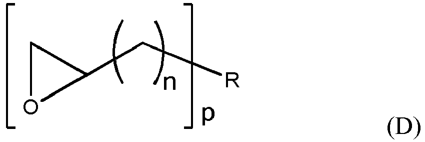 wherein n is greater than or equal to 1, and R can be a chemical group (including, but not limited to, ether, ester, phenyl, alkyl, alkynyl, etc.), and p is greater than or equal to 2 such that there are at least 2 of the epoxy moieties present. Bisphenol A diglycidyl ether (BADGE) is an exemplary epoxy moiety where R is bisphenol A, n is 1, and p is 2. The epoxy moiety can have an epoxide equivalent weight of 200 and 300, or 200 to 600, or 475 to 550 grams/equivalent as determined in accordance with ASTM D-1652.

The epoxy moiety can comprise at least one of an epoxidized 1,1,1-tris(4-hydroxyphenyl)ethane, an epoxidized 1,1,2,2,-tetra(4-hydroxyphenyl)ethane, an epoxidized phenol-formaldehyde novolac, an epoxidized cresol-formaldehyde novolac, an epoxidized alkylphenol-formaldehyde novolac, an epoxidized phenol-dicyclopentadiene novolac, or an epoxidized phenol-benzaldehyde novolac.

The epoxy moiety can comprise a glycidyl epoxy resin such as the glycidyl epoxy ether as shown in formula (A). The value of n can be 0 to 25 in formula (A). Depending on the number of repeat units, n, the glycidyl epoxy ether can be considered a monomer (e.g. n=0), an oligomer (e.g. n=1 to 7), or a polymer (n=8 to 25). BADGE-based resins can have at least one of excellent electrical properties, low shrinkage, good adhesion to numerous metals, good moisture resistance, good heat resistance, or good resistance to mechanical impacts. BADGE oligomers (where n=1 or 2) are commercially available as D.E.R.™ 671 from Dow. The glycidyl epoxy ether can have at least one of: an epoxide equivalent weight of 475 to 550 grams/equivalent as determined in accordance with ASTM D-1652, an epoxide percentage of 7 to 10% as determined in accordance with ASTM D-1652, an epoxide group content of 1800 to 2500 millimoles of epoxide/kilogram as determined in accordance with ASTM D-1652, a melt viscosity at 150°C of 400 to 950 millipascal seconds (mPa·sec), and a softening point of 75 to 85°C.

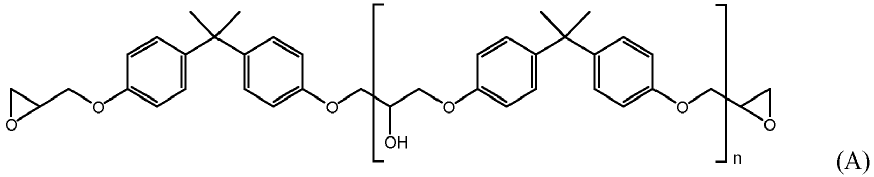

The epoxy moiety can comprise a multifunctional glycidylester moiety such as ARALDITE™ PT 910 commercially available from Huntsman Advanced Materials Inc.

The epoxy moiety can comprise a novolac resin. The novolac resin can be obtained by reacting phenol with formaldehyde in the presence of an acid catalyst to produce a novolac phenolic resin, followed by a reaction with epichlorohydrin in the presence of sodium hydroxide as catalyst. An example of a novolac resin is shown in formula (B) 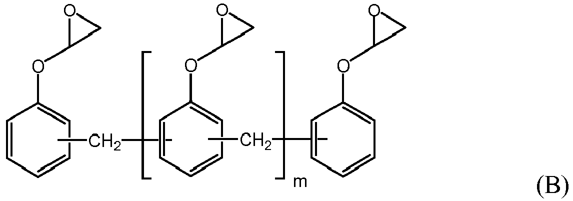 wherein m is 0 to 25.

The epoxy moiety can comprise a cycloaliphatic epoxy such as ERL of the formula (C).

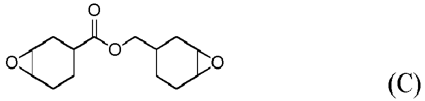

Other exemplary monomeric epoxy moietys include diglycidyl benzenedicarboxylate as shown in formula (E) and triglycidyl benzene tricarboxylate as shown in formula (F).

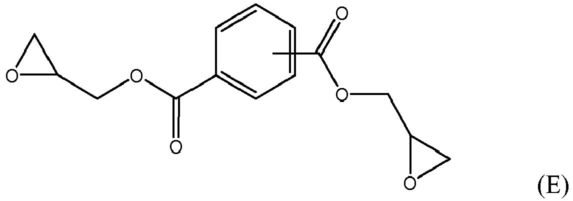

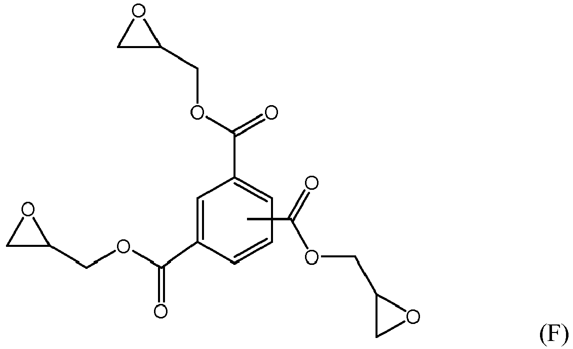

The epoxy moiety can comprise an epoxidized styrene-acrylic copolymer (CESA). CESA is a copolymer of styrene, methyl methacrylate, and glycidyl methacrylate as is shown in formula (G). The CESA copolymer can have at least one of a weight average molecular weight of 6,000 to 8,000 g/mol or an epoxy equivalent weight (weight in grams of resin containing 1 mol equivalent of epoxide) of 250 to 350 g/mol.

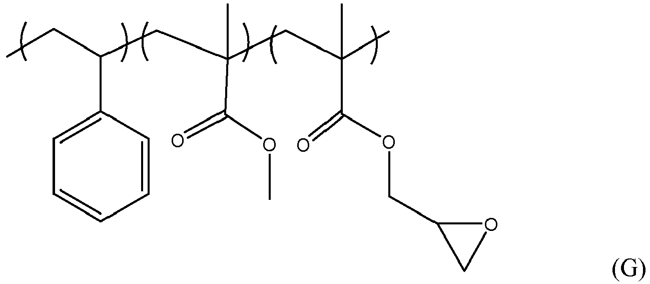

The present compositions may include about 0-10% by weight of an impact modifier. That is, there may be no impact modifier in the compositions, or there may be up to about 10% by weight of impact modifier. For example, the compounds may include about 1-10, 2-10, 3-10, 4-9, 5-8, 5-9, 6-9, 7-9, or 8-9 percent by weight of an impact modifier, or about 1, 2, 3, 4, 5, 6, 7, 8, 9, or 10 percent by weight of an impact modifier.

Any suitable impact modifier may be used in the present compositions. Impact modifiers may be, for example, high molecular weight elastomeric materials derived from olefins, monovinyl aromatic monomers, acrylic and methacrylic acids and their ester derivatives, as well as conjugated dienes that are fully or partially hydrogenated. The elastomeric materials can be in the form of homopolymers or copolymers, including random, block, radial block, graft, and core-shell copolymers.

A specific type of impact modifier may be an elastomer-modified graft copolymer comprising (i) an elastomeric (i.e., rubbery) polymer substrate having a Tg less than about 10 °C, less than about 0 °C, less than about -10 °C, or between about -40 °C to -80 °C, and (ii) a rigid polymer grafted to the elastomeric polymer substrate. Materials suitable for use as the elastomeric phase include, for example, conjugated diene rubbers, for example polybutadiene and polyisoprene; copolymers of a conjugated diene with less than about 50 wt % of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C1-C8 alkyl(meth)acrylates; elastomeric copolymers of C1-C8 alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the C1-C6 esters of acrylic acid and methacrylic acid, specifically methyl methacrylate.

Specific impact modifiers include styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). Exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), styrene-acrylonitrile (SAN), ethylene-acrylic ester-glycidyl methacrylate (e.g., ethylene-ethyl acrylate-glycidyl methacrylate), natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR), silicone elastomers, high rubber graft (HRG), and the like. Some suitable impact modifies include PC (polycarbonate)/ABS (such as Cycoloy PC/ABS) and MBS type formulations.

In particular embodiments, the impact modifier is a terpolymer of ethylene, acrylic ester, and glycidyl methacrylate.

The compositions can include one or more additional polymeric materials that are not polyethylene terephthalate. The additional polymer (some of which can also represent an impact modifier of the type described above) can comprise at least one of an acrylic polymer, an acrylic-styrene-acrylonitrile (ASA) resin, an acrylonitrile-butadiene-styrene (ABS) resin, an ethylene-tetrafluoroethylene copolymer, an ethylene-vinyl acetate copolymer, a liquid crystal polymer, a poly(alkenyl aromatic) polymer, a polyacetal, a polyacrylonitrile, a polyamide, a polyamideimide, a polybutadiene, a polycarbonate (for example, a bisphenol A homopolycarbonate, a polycarbonate copolymer, a tetrabromo-bisphenol A polycarbonate copolymer, or a polysiloxane-co-bisphenol A polycarbonate), a polyether, a polyetherimide, a polyether ketone, a polyether ether ketone, a polyethersulfone, a polyimide, a polylactic acid (PLA), a polylactide, a polyolefin, a polyphenylene ether, a polyphenylene sulfide, a polyphenylsulfone, a polysiloxane, a polystyrene, a polysulfone, polytetrafluoroethylene a polyurethane, a polyvinyl acetate, a polyvinyl fluoride, a polyvinylidene chloride, or a polyvinylidene fluoride.

The compositions may include one or more fillers. Exemplary fillers include glass fibers, carbon fibers, polyester fibers, polyamide fibers, aramid fibers, cellulose and nanocellulose fibers, and plant fibers (linseed, hemp, sisal, bamboo, etc.) any of which, alone or in any combination, may be included. In certain embodiments, the compositions include a glass fiber filler. The glass fibers may be characterized by an average diameter of about 10 micrometers (µm).

Plasticizers, lubricants, mold release agents, or any combination of these can also be included in the present compositions. Mold release agent (MRA) will allow the material to be removed from the molding apparatus quickly and effectively. Mold release agents can also reduce cycle times, defects, and browning of finished product. There is considerable overlap among these types of materials, which may include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate (PETS), and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; and, waxes, such as beeswax, montan wax, or paraffin wax.

One or more antioxidants may also be included in the present compositions. Exemplary antioxidant additives include organophosphites such as tris(nonyl phenyl)phosphite, tris(2,4-di-t-butylphenyl)phosphite ("IRGAFOS 168" or "1-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid.

The present disclosure also provides plastic-metal hybrid materials that are formed by injection molding a plastic composition according to any embodiment described above onto a surface of a metal part, the surface having nanometer-sized pores, micron-sized pores, or both. Also disclosed are methods for forming the plastic-metal hybrid materials comprising injection molding a plastic composition according to any embodiment described above onto a surface of a metal part, the surface having nanometer-sized pores, micron-sized pores, or both. Each of the characteristics of the plastic composition that have been described above may be used with respect to the plastic-metal hybrid materials and pursuant to the present methods, and are not recapitulated here.

The metal part in the present plastic-metal hybrid materials and the present methods for making such materials may comprise any type of metal or metal alloy that is suitable for use in nano-molding technology applications. Typical metals include aluminum, steel (including stainless steel), copper, titanium, magnesium, any combination of these metals, or any alloy otherwise including one or more of these metals.

The surface of the metal part onto which the plastic composition is injection molded in order to form the plastic-metal hybrid has nanometer-sized pores, micron-sized pores. Several processes have been developed among those working in the NMT field for forming pores of the required type on a surface of a metal part. In certain embodiments, the pores are formed by chemical etching or by electrical oxidation and surface coating. Exemplary procedures for forming the required pores on a surface of the metal part include "T"-treatment, "G" treatment, "E" treatment, TRIazine treatment (i.e., Technology Rising from IWA TE); these are procedures with which those skilled in the art are familiar and that are described more fully in the relevant literature. As used herein, "electrical oxidation and surface coating" refers to a process of the type exemplified by TRIazine treatment. A comparison of certain aspects of "T"-type treatment and TRI type treatment is provided below in Table 1:

**Table 1**

| | **TYPE 1-T Treatment, or the like** | **TYPE 2 - TRI Treatment** |
|---|---|---|
| **Bonding method** | Anchoring porous hole generally | Anchoring hole + Chemical adhesion |
| **Treatment** | Chemical etching | Electrical oxidation + TRIazine surface coating |
| **Porous hole** | Various hole sizes (micro to nano) | Uniform nano hole + 0.2µm coating |
| **Technology** | "T", "G" treatment and etc... | "TRI", "E" and other similar tech |
| **Strength** | 30∼35 MPa [with PBT] | 32∼40 MPa [with PBT] |
| **Water proof** | Possible but worse | Better |
| **Process** | Dipping solution [Around 30 steps] | Dipping solution [Around 12 steps] |

The pores may alternatively be formed by laser etching. Those skilled in the art can readily identify appropriate equipment and conditions for laser etching of a metal surface pursuant to the formation of a metal-plastic hybrid material.

The process of injection molding the epoxy-containing plastic composition onto the surface of the metal part may be carried out using conventional approaches, with which those skilled in the art are familiar.

As described more fully in the examples *infra,* the presently disclosed plastic-metal hybrid materials are characterized by a beneficially high bonding strength between the plastic resin and metal part. For example, a joint formed between the plastic composition and the metal part in order to form a plastic-metal hybrid according to the present disclosure can have a bonding strength of about 31-41 mPa when measured according to ISO 19095. In certain embodiments, of the present plastic-metal hybrid material, a joint formed between the plastic and the metal has a bonding strength of about 35-41 mPa when measured according to ISO 19095.

Additionally, the plastic-metal hybrid materials according to the present disclosure feature beneficially high bonding strength even after the plastic composition is subjected to an extended dwell time within the injection molding apparatus. The performance of certain conventional plastic materials can deteriorate if the plastic is retained within ("dwells") the injection molding apparatus for less than the ideal period of time. This situation may occur if it is not possible (e.g., due to processing limitations or the inability of the machinery being used to function at a more accelerated pace) to commence the injection molding process within a desired time period following introduction of the plastic resin. It is therefore desirable for a plastic composition to be able to maintain its performance characteristics even after an extended dwell period within the injection molding apparatus. The present inventors have surprisingly found that such a benefit is conferred by using the plastic composition disclosed herein. For example, the bonding strength between the plastic composition and the metal may be about 28 to about 32 MPa, when measured according to ISO 19095 following about five minutes of dwell time within an injection molding apparatus.

It has also been discovered that the plastic-metal hybrid materials that are formed using the presently disclosed plastic compositions and using the methods according to the present disclosure are characterized by a beneficially high impact strength, which is important for their use in personal electronic devices, for example. In certain embodiments, the plastic-metal hybrid may have a falling dart impact strength of about 1.9 to 2.5 kN, when measured according to ISO 6603. For example, the plastic-metal hybrid may have a falling dart impact strength of about 1.9, 2.0, 2.1, 2.2, 2.3, 2.4, or 2.5 kN, when measured according to ISO 6603.

Following formation of the plastic-metal hybrid, the material may be subjected to an anodization process in order to confer a desirable color to the metal. The examples that are provided later in the present disclosure demonstrate how the use of the disclosed plastic compositions beneficially resists unwanted color change as a result of an anodization procedure. For example, the plastic-metal hybrid materials may be characterized by a Delta E color change following anodiziation of the material of about 2.0 to about 4.0. The plastic-metal hybrids may also or alternatively be characterized by a Delta b color change following anodiziation of about 2.0 to about 4.0.

Also provided herein are components for electronic devices comprising a plastic-metal hybrid material according to the present disclosure, as well as electronic devices that include a plastic-metal hybrid material according to the present disclosure. The electronic device may be, for example, a mobile phone, a tablet, a digital camera, an electronic reader, or a laptop or desktop computer. The components of such devices that can comprise the plastic-metal hybrid materials of the present disclosure can be, for example, all or a portion of an outer casing, shell, or panel.

### Aspects

In various aspects, the present disclosure pertains to and includes at least the following aspects.
Aspect 1. A plastic composition for use in forming a plastic-metal hybrid material comprising:
   about 45-65% by weight polybutylene terephthalate;
   about 6-13% by weight of an epoxy compound, such as a bifunctional epoxy compound;
   0 to about 10% by weight of an impact modifier;
   about 25-45% by weight of glass fibers; and
   0 to about 1% by weight of polyethylene,
   wherein the epoxy compound has one or more of (i) an epoxide equivalent weight of less than 550 g/eq or greater than 600 g/eq as measured according to ASTM D-1652, (ii) a percentage epoxide of at least 2.0% as measured according to ASTM D-1652, or (iii) a melt viscosity of at least 400 MPa as measured at 150°C according to ASTM D-445,
   wherein the composition does not include polyethylene terephthalate, and
   wherein the total percentage by weight of all components is 100.
Aspect 2. The plastic composition according to aspect 1, wherein the epoxy compound, such as a bifunctional epoxy compound, has a molecular weight of about 700-1100 g/mol, an epoxide equivalent weight of about 475-550 g/eq, and a percentage epoxide of about 7.8-9.1%.
Aspect 3. The plastic composition according to aspect 1, wherein the epoxy compound, such as a bifunctional epoxy compound, has an epoxide equivalent weight of about 1600-2000 g/eq, and a percentage epoxide of about 2.2-2.7%.
Aspect 4. The plastic composition according to any preceding aspect, comprising about 6-7% by weight of the epoxy compound.
Aspect 5. The plastic composition according to any one of aspects 1-Aspect 3, comprising about 12-13% by weight of the epoxy compound.
Aspect 6. The plastic composition according to any preceding aspect, wherein the impact modifier is a terpolymer of ethylene, acrylic ester, and glycidyl methacrylate.
Aspect 7. The plastic composition according to any preceding aspect, comprising about 5-8% by weight of impact modifier.
Aspect 8. The plastic composition according to any preceding aspect, wherein the polybutylene terephthalate has a molecular weight of about 115 kg/mol.
Aspect 9. A plastic-metal hybrid material that is formed by injection molding a plastic composition according to any preceding aspect onto a surface of a metal part, the surface having nanometer-sized pores, micron-sized pores, or both.
Aspect 10. The plastic-metal hybrid material according to aspect Aspect 9, the pores on the surface of the metal part having been formed by chemical etching, laser etching, or both.
Aspect 11. The plastic-metal hybrid material according to aspect Aspect 9 or Aspect 10, wherein the metal part comprises aluminum, an aluminum alloy, steel, copper, titanium, magnesium, or any combination thereof.
Aspect 12. The plastic-metal hybrid material according to any one of aspects Aspect 9-Aspect 11, wherein the bonding strength between the plastic composition and the metal is about 31 to about 41 MPa, when measured according to ISO 19095.
Aspect 13. The plastic-metal hybrid material according to any one of aspects Aspect 9-Aspect 12, wherein the bonding strength between the plastic composition and the metal is about 35 to about 41 MPa, when measured according to ISO 19095.
Aspect 14. The plastic-metal hybrid material according to any one of aspects Aspect 9-Aspect 13, wherein the bonding strength between the plastic composition and the metal is about 28 to about 32 MPa, when measured according to ISO 19095 following about five minutes of dwell time within a molding apparatus that is used for the injection molding.
Aspect 15. The plastic-metal hybrid material according to any one of aspects Aspect 9-Aspect 14, wherein the falling dart impact strength is about 1.9 to about 2.5 kN, when measured according to ISO 6603.
Aspect 16. The plastic-metal hybrid material according to any one of aspects Aspect 9-Aspect 15 wherein the Delta E color change following anodiziation of the material is about 2.0 to about 4.0.
Aspect 17. The plastic-metal hybrid material according to any one of aspects Aspect 9-Aspect 16 wherein the Delta b color change following anodiziation of the material is about 2.0 to about 4.0.
Aspect 18. A method for forming a plastic-metal hybrid material comprising:
   injection molding a plastic composition according to any one of aspects 1-Aspect 8 onto a surface of a metal part, the surface having nanometer-sized pores, micron-sized pores, or both.
Aspect 19. The method according to aspect Aspect 18, wherein the pores on the surface of the metal part having been formed by chemical etching, laser etching, or both.
Aspect 20. The method according to aspect Aspect 18 or aspect Aspect 19, wherein the metal part comprises aluminum, an aluminum alloy, steel, copper, titanium, magnesium, or any combination thereof.
Aspect 21. The method according to any one of aspects Aspect 18-Aspect 20, further comprising anodizing the metal part.
Aspect 22. An electronic device comprising a plastic-metal hybrid material that is formed from a plastic composition according to any one of aspects 1-Aspect 8.
Aspect 23. An electronic device comprising a plastic-metal hybrid material according to any one of aspects Aspect 9-Aspect 17.
Aspect 24. An electronic device comprising a plastic-metal hybrid material that is formed according to the method of any one of aspects Aspect 18-Aspect 21.
Aspect 25. The electronic device according to any one of aspects Aspect 22-Aspect 24, wherein the plastic-metal hybrid material forms at least a portion of a housing of said device.

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Efforts have been made to ensure accuracy with respect to numbers (e.g., amounts, temperature, etc.), but normal experimental deviations should be accounted for.

### EXAMPLES

### Example 1 - Assessment of Bonding and Impact Strength

Several plastic resin materials were assessed for bonding strength that the materials conferred pursuant to a nano-molding technology application. The tested materials were either conventional non-epoxy plastic compositions, or epoxy-based compositions according to the present invention. The materials that were used to form the respective resins are listed in Table 2:

**Table 2**

| **Name** | **Description** | **Supplier** |
|---|---|---|
| PBT 1 | Polybutylene terephthalate (PBT) 315, milled (MW≈ 115 kg/mol) | SABIC |
| PBT 2 | Polybutylene terephthalate (PBT) 195 Mw ≈ 61 kg/mol) | SABIC |
| Epoxy 1 | DER 671™ Epoxy Resin (MW = 0.7-1.1 kg/mol) | Olin |
| Epoxy 2 | DER 667™ Epoxy resin | Olin |
| PE | Polyethylene (PE) (ld), milled 1000 µm | SABIC |
| Anti-Oxidant | Irganox® 1010 | BASF |
| IM | Lotader AX8900 | Arkema |
| GF 1 | Chopped glass (aluminum-borosilicate) fiber, bonding (with sizing) for crystalline PBT resin, diameter 10 µm | Nippon Electric Glass |

In order to form the resins, the materials for each respective resin were compounded using a Werner & Pfleiderer Extruder ZSK 25 mm co-rotating twin-screw extruder with a melt temperature of ∼280 °C, an output of 20-30 kilograms per hour (kg/h), and 300 revolutions per minute (rpm). The residence time in the extruder was less than 30 seconds. The compounded pellets were then molded using SUMITOMO SE180EV with conditions as indicated in Table 3, below, unless otherwise stated.

**Table 3**

| **Cylinder Temperature** | **Metal and Treatment** | **Mold Temperature** | **Holding Pressure** |
|---|---|---|---|
| 250°C | AL6061 butt type & TRI treated | 145°C | 1000 bar / 5 sec |

A bonding tool was used to mold parts that can be assessed with respect to bonding strength and falling dart impact. The bonding strength and falling dart impact were measured using UTM (MTS Model44) based on ISO 19095, and a Dynatub device (INSTRON 9250HV) based on ISO 6603, respectively.

Table 4 lists the tested materials and describes the effect of epoxy content on the plastic-metal bonding strength. Each tested formulation contained 30% glass fiber and a PBT polymer: comparative example CE1 contained only the PBT material (i.e., did not include an epoxy compound), and the experimental formulations (E2-E5) included varying amounts of an epoxy material.

**Table 4**

| **Material** | **CE1** | **E2** | **E3** | **E4** | **E5** |
|---|---|---|---|---|---|
| PBT 1 | 69.35 | 63.1 | 56.85 | 56.85 | 56.85 |
| Epoxy 1 | | 6.25 | 12.5 | 6.25 | |
| Epoxy 2 | | | | | 12.5 |
| PE | 0.50 | 0.50 | 0.50 | 0.50 | 0.50 |
| Antioxidant | 0.15 | 0.15 | 0.15 | 0.15 | 0.15 |
| GF 1 | 30.0 | 30.0 | 30.0 | 30.0 | 30.0 |
| IM | | | | 6.25 | |
| **Bonding strength (MPa)** | **31.27** | **35.67** | **36.72** | **30.77** | **40.81** |
| **Impact** | **2.19** | **2.24** | **1.94** | **2.44** | **1.94** |

As shown above, Examples E2 and E3 demonstrate that including an epoxy in a composition containing glass-filled PBT leads to significantly higher bonding strength than a composition containing PBT alone (CE1). Example E4 shows that the impact properties can be improved by adding an impact modifier, while still maintaining high bonding strength. Example E5 shows that a high bonding strength can also be obtained if another type of epoxy is used.

Table 5 describes the results of a further assessment regarding the effect of varying the type of PBT material. In Example E6, PBT 2 was used in place of PBT 1.

**Table 5**

| **Material** | **E6** |
|---|---|
| PBT 2 | 56.85 |
| Epoxy 1 | 12.5 |
| PE | 0.50 |
| Antioxidant | 0.15 |
| GF 1 | 30.0 |
| **Bonding strength (MPa)** | **24.86** |
| **Impact** | **1.67** |

The results of the preceding assessment indicate that the type of PBT material that is used can also influence the bonding strength and impact strength of the resulting plastic composition.

The effect of modifying the conditions of processing the plastic composition (i.e., mold temperature and cylinder temperature) was also assessed. Table 6 lists how the processing conditions for the preparation of the composition of Example E6 were varied, and provides the bonding strength associated with each set of conditions.

**Table 6**

| **E6** | | | | | | |
|---|---|---|---|---|---|---|
| **Mold Temperature (MT) in °C** | 135 | 135 | 135 | 145 | 135 | 135 |
| **Cylinder Temperature (CT) in °C** | 220 | 230 | 240 | 250 | 250 | 270 |
| **Bonding strength (MPa)** | 32.6 | 34.72 | 35.27 | 39.47 | 42.43 | 42.18 |

The data in Table 6 demonstrate that the epoxy-based composition provides a bonding strength of at least 30 MPa over a varying processing conditions.

### Example 2 - Assessment of Color Change

Color change following anodization of as-molded samples were assessed. Table 7 describes the results of the assessment with respect to samples CE1, E2, E4, and E5 as originally described in Example 1.

**Table 7**

| | **Delta E** | **Delta L** | **Delta a** | **Delta b** |
|---|---|---|---|---|
| CE1 | 5.43 | -0.35 | -0.36 | 5.41 |
| E2 | 2.84 | -0.92 | -0.79 | 2.57 |
| E4 | 6.35 | -0.48 | -0.73 | 6.29 |
| E5 | 2.57 | 1.06 | -0.54 | 2.28 |

Table 7 demonstrates that the Delta E change of inventive samples E2 and E5 were much less than was observed for CE1. Accordingly, the epoxy-based compositions have a more minimal influence on color change following anodization then the conventional PBT-only composition.

### Example 3 - Assessment of Performance Following Increased Dwell Time

Sample E4 was tested in order to determine the effect on bonding strength conferred by that sample when the dwell time within the injection molding apparatus is increased. The test conditions included a cylinder temperature of 265°C, and a mold temperature of 155°C. Table 8 provides the results of the assessment.

**Table 8**

| **Dwell time (minute)** | **0** | **3** | **5** |
|---|---|---|---|
| Bonding strength (MPa) | 32.25 | 32.22 | 30.67 |

The assessment revealed that bonding strength was substantially consistent even after five minutes dwell time (as compared with no dwell time in the original examples).

## Claims

1. A plastic composition for use in forming a plastic-metal hybrid material comprising:
about 45-65% by weight polybutylene terephthalate;
about 6-13% by weight of an epoxy compound;
0 to about 10% by weight of an impact modifier;
about 25-45% by weight of glass fibers; and
0 to about 1% by weight of polyethylene,
wherein the epoxy compound has an epoxide equivalent weight of less than 550 g/eq or greater than 600 g/eq as measured according to ASTM D-1652,
wherein the composition does not include polyethylene terephthalate, and
wherein the total percentage by weight of all components is 100.

2. The plastic composition according to claim 1, wherein the epoxy compound has a molecular weight of about 700-1100 g/mol, an epoxide equivalent weight of about 475-550 g/eq, and a percentage epoxide of about 7.8-9.1%.

3. The plastic composition according to claim 1, wherein the epoxy compound has an epoxide equivalent weight of about 1600-2000 g/eq, and a percentage epoxide of about 2.2-2.7%.

4. The plastic composition according to any preceding claim, comprising about 6-7% or about 12-13% by weight of the epoxy compound.

5. The plastic composition according to any preceding claim, comprising about 5-8% by weight of impact modifier.

6. A plastic-metal hybrid material that is formed by injection molding a plastic composition according to any preceding claim onto a surface of a metal part, the surface having nanometer-sized pores, micron-sized pores, or both.

7. The plastic-metal hybrid material according to claim 6, wherein the bonding strength between the plastic composition and the metal is about 31 to about 41 MPa, when measured according to ISO 19095.

8. The plastic-metal hybrid material according to claim 6, wherein the bonding strength between the plastic composition and the metal is about 35 to about 41 MPa, when measured according to ISO 19095.

9. The plastic-metal hybrid material according to claim 6, wherein the bonding strength between the plastic composition and the metal is about 28 to about 32 MPa, when measured according to ISO 19095 following about five minutes of dwell time within a molding apparatus that is used for the injection molding.

10. The plastic-metal hybrid material according to any one of claims 6-9, wherein the falling dart impact strength is about 1.9 to about 2.5 kN, when measured according to ISO 6603.

11. The plastic-metal hybrid material according to any one of claims 6-10 wherein the Delta E color change following anodization of the material is about 2.0 to about 4.0, the Delta b color change following anodization of the material is about 2.0 to about 4.0, or both.

12. A method for forming a plastic-metal hybrid material comprising:
injection molding a plastic composition according to any one of claims 1-5 onto a surface of a metal part, the surface having nanometer-sized pores, micron-sized pores, or both.

13. An electronic device comprising a plastic-metal hybrid material that is formed from a plastic composition according to any one of claims 1-5.

14. An electronic device comprising a plastic-metal hybrid material according to any one of claims 6-11, or that is formed according to the method of claim 12.

15. The electronic device according to claim 13 or claim 14, wherein the plastic-metal hybrid material forms at least a portion of a housing of said device.
